# EUROPÄISCHE PATENTANMELDUNG

(11) **EP 0 992 394 A2**
(43) Veröffentlichungstag der Anmeldung: **12.04.2000**
(21) Anmeldenummer: 99116899.8
(22) Anmeldetag: 07.09.1999
(51) Int. Cl.: B60N 2/48

(54) **Crashbetätigte Höhenarretierung für eine Kopfstütze**

(30) Priorität: 08.10.1998 DE 19846403
(71) Anmelder: Volkswagen Aktiengesellschaft, 38436 Wolfsburg (DE)
(72) Erfinder: Albrecht, Björn, Dipl.-Ing., 38527 Meine (DE)
(74) Vertreter: Schneider, Henry

(57) **Zusammenfassung**

Zur crashbetätigten Höhenarretierung einer Kopfstütze an einem Kraftfahrzeugsitz dient eine mit einer trägen Masse (7) versehene Schwenkklinke (5), die bei einem Crash aus einer Höhenverstellungen der Kopfstütze zulassenden neutralen Position in eine Arretierposition (5') schwenkt, in der sie eine kopfstützenseitige Stange (1) und eine sitzseitige Aufnahme (2) für diese formschlüssig verbindet. In vorteilhafter Weise läßt die Erfindung völlige Freiheit bezüglich gewollter Höhenverstellungen im normalen Fahrbetrieb.

## Beschreibung

Die Erfindung betrifft eine crashbetätigte Höhenarretierung für eine Kopfstütze gemäß dem Oberbegriff des Patentanspruchs 1.

Um eine unerwünschte Höhenverstellung oder gar ein Lösen einer Kopfstütze von der Rückenlehne eines Kraftfahrzeugsitzes unter der Wirkung der bei einem Crash, insbesondere einem Heckcrash, auftretenden hohen Kräfte zu verhindern, ist es erforderlich, zusätzlich zu der Höhenarretierung der Kopfstütze im normalen Fahrbetrieb Maßnahmen zu treffen. So beschreibt die DE 196 32 561 A1 eine diesbezügliche Konstruktion, die eine Blockierung einer betriebsmäßigen Höhenarretierung durch eine träge Masse vorsieht. Die betriebsmäßige Höhenarretierung enthält einen schieberartig ausgeführten Betätigungsknopf, der unter der Wirkung von Druckfedern normalerweise eine Stellung einnimmt, in der er eine formschlüssige Verbindung zwischen einer kopfstützenseitigen Stange einerseits und einer von dieser durchsetzten Aufnahme an der Rückenlehne des Sitzes andererseits herstellt. Zur Aufhebung dieser formschlüssigen Verbindung zwecks Verstellung der Höhe der Kopfstütze muß der Betätigungsknopf entgegen der Wirkung der Druckfedern gleichsam in die Aufnahme hineingedrückt werden; dann gelangt er außer Eingriff mit zahnartigen Profilen der kopfstützenseitigen Stützstange. Im Crashfalle legt sich dagegen die sonst durch Federn in einer neutralen Position gehaltene träge Masse so vor eine Stirnseite des Betätigungsknopfes, daß dieser nicht aus seiner Arretierposition in eine neutrale Position verschoben werden kann, in der er die Höhenverstellung der Kopfstütze zuläßt. Diese bekannte Lösung nutzt zwar zur gewollten Höhenverstellung bzw. Höhenarretierung der Kopfstütze ohnehin vorhandene Teile zur crashbetätigten Höhenarretierung der Kopfstütze aus, setzt jedoch eine bestimmte Konstruktion für die gewollte Höhenverstellung, nämlich mit einem quer verschiebbaren Betätigungsknopf, voraus. Häufig ist man jedoch daran interessiert, die Konstruktion für die Höhenverstellung so auszubilden, daß nicht ein Betätigungsknopf gedrückt werden muß, sondern die Arretierung Federrasten enthält, so daß die Höhenverstellung durch Aufbringen einer in Höhenrichtung verlaufenden Kraft seitens des auf dem Fahrzeugsitz befindlichen Fahrzeuginsassen vorgenommen werden kann. Dies ermöglicht auch eine Höhenverstellung der Kopfstütze während der Fahrt.

Die DE 36 36 931 C1 und DE 195 23 358 A1 beschreiben Mechanismen für die betriebsmäßige Arretierung von Kopfstützen, die zweiarmige Schwenkklinken enthalten. Der jeweils untere Arm ist als eigentliche Klinke ausgebildet, während der jeweils obere Arm mit einem Betätigungshebel in Verbindung steht. Den Klinken sind bei definierten Höhenstellungen fluchtende Rastausnehmungen in kopfstützenseitiger Stützstange und sitzlehnenseitiger Aufnahme für diese zugeordnet. Bei diesen bekannten Konstruktionen handelt es sich aber, wie gesagt, um Mechanismen für die betriebsmäßige Höheneinstellung der Kopfstütze, nicht aber um crashbetätigte Höhenarretierungen. Außerdem erfordern auch diese bekannten Konstruktionen die Bedienung von Betätigungsknöpfen. Die in der zweitgenannten Schrift beschriebene Konstruktion besitzt den Vorteil, daß infolge rohrförmiger Ausbildung sowohl der Stützstange als auch der Aufnahme die Schwenkklinke in dem innenliegenden der beiden Rohre, dort der kopfstützenseitigen Stützstange, untergebracht werden kann, so daß nach außen lediglich die Außenwand des Rohres sichtbar ist.

Der Erfindung liegt die Aufgabe zugrunde, eine gattungsgemäße crashbetätigte Höhenarretierung für eine Fahrzeug-Kopfstütze zu schaffen, die völlige Freiheit hinsichtlich der Ausbildung der betriebsmäßigen Höhenarretierung und Höhenverstellung der Kopfstütze läßt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

In Abweichung von den zuletzt behandelten beiden Druckschriften betrifft die Erfindung also speziell eine crashbetätigte Höhenarretierung unter Ausnutzung des Effekts der Massenträgheit, und in Abweichung von dem gattungbildenden Stand der Technik sieht die Erfindung eine crashbetätigte Höhenarretierung gegebenenfalls zusätzlich zu einer demgemäß völlig frei gestaltbaren betriebsbedingten Höhenarretierung und Höhenverstellung vor. In weiterer Abweichung von dem gattungbildenden Stand der Technik ist die träge Masse in das als Schwenkklinke ausgebildete Arretierglied integriert.

Ein weiterer Vorteil der Erfindung ist, wie im folgenden anhand der Beschreibung von Ausführungsbeispielen ersichtlich wird, darin zu sehen, daß sie bei minimalem Aufwand an Teilen die Möglichkeit unterschiedlicher Ausgestaltungen unter Anpassung an den jeweiligen Einsatzfall bietet.

Die Figuren zeigen Längsschnitte durch den teleskopierenden Bereich von Stützstange und Aufnahme für diese an der Stelle der Unterbringung der crashbetätigten Höhenarretierung.

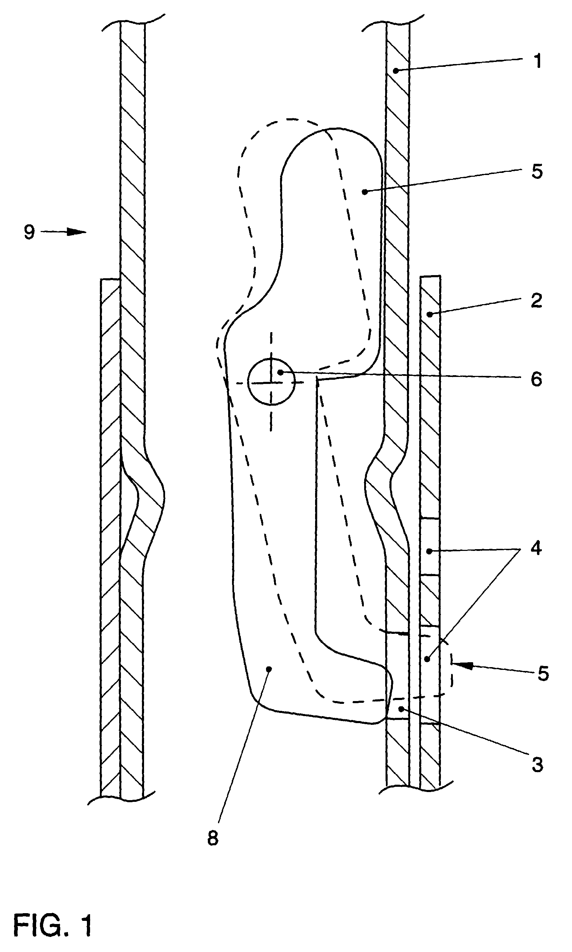

Betrachtet man zunächst Figur 1, so sind sowohl die kopfstützenseitige Stützstange 1 (an deren oberen Ende die nicht gezeichnete Kopfstütze vorteilhafterweise schwenkbar gelagert ist) als auch die sitzrückenlehnenseitige Aufnahme 2 (die Rückenlehne ist nicht gezeichnet) als Rohre ausgebildet, die bereichsweise teleskopierend verlaufen. Auf die Einzelheiten der Kopfstütze und der Sitzrückenlehne im Bereich der Aufnahme 2 braucht nicht eingegangen zu werden, da diese bekannt sind; ein Vorteil der Erfindung besteht darin, daß sie keine spezielle Konstruktion für Kopfstütze bzw. Rückenlehne erfordert.

Während die Stützstange 1 mit einer als Durchgangsloch ausgebildeten Rastausnehmung 3 versehen ist, weist die Aufnahme 2 mehrere längs einer Mantellinie aufeinanderfolgende, hier ebenfalls als Durchgangslöcher ausgebildete Rastausnehmungen 4 auf. In definierten Höhenlagen der Kopfstütze und damit der Stützstange 1 fluchtet die Rastausnehmung 3 in dieser mit einzelnen der Rastausnehmungen 4 in der Aufnahme 2.

In der Stützstange 2 ist die allgemein mit 5 bezeichnete, das Arretierglied bildende Schwenkklinke um die Schwenkachse 6 schwenkbar gelagert. In diesem Ausführungsbeispiel ist die Schwenkklinke 5 zweiarmig mit dem oberen Arm 7, der eine träge Masse bildet, und dem unteren Arm 8 ausgebildet, der die eigentliche Klinke bildet. Die Massenbelegung des oberen Klinkenarms 7 ist derart exentrisch bezüglich der Schwenkachse 6 gewählt, daß er ein in der Darstellung der Figur 1 im Uhrzeigersinn wirkendes Drehmoment auf die Schwenkklinke 5 ausübt. Er stützt sich an der gleichsam einen Anschlag bildenden Innenfläche der Stützstange 1 ab; in dieser Position ist der Klinkenbereich der Schwenkklinke 5 außer Eingriff mit der Rastausnehmung 3. Sobald aber infolge eines Heckcrashs (Auffahren eines anderen Fahrzeugs) eine große Kraft im Sinne des Pfeils 9 auf das Fahrzeug bzw. die Kopfstützenanordnung wirkt, sorgt die Trägheit der Masse des oberen Klinkenarms 7 dafür, daß die Schwenkklinke 5 um die Schwenkachse 6 entgegen dem Uhrzeigersinn schwenkt, so daß sie bei Abwärts- und Aufwärtsbewegungen der Kopfstütze mit der Stützstange 1 und fluchtender Lage einer der Rastausnehmungen 4 bezüglich der Rastausnehmung 3 in ihre bei 5' dargestellte Arretierposition schwenkt. In dieser Position stellt sie eine formschlüssige Verbindung zwischen den Teilen 1 und 2 her, so daß die Kopfstütze an einer (weiteren) Veränderung ihrer Höhenlage gehindert ist. Die Schwenkklinke 5 bewirkt also nur im Crashfalle eine Arretierung der Kopfstütze in Höhenrichtung.

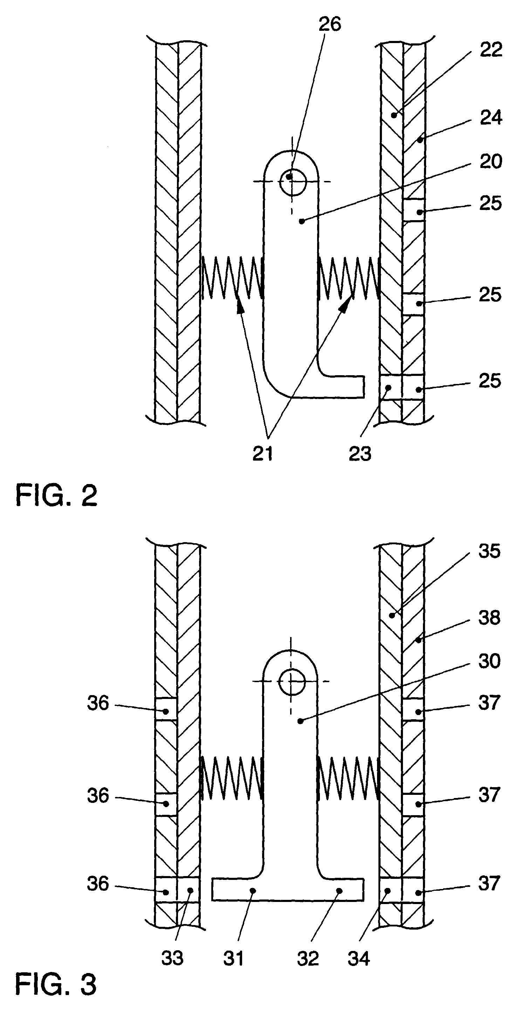

Während in dem Ausführungsbeispiel nach Figur 1 eine zweiarmige Schwenkklinke mit einer solchen Massenbelegung des oberen Hebelarms vorgesehen ist, daß die Schwenkklinke 5 im crashfreien Zustand auch ohne zusätzliche Federn in ihrer neutralen Position gesichert ist, zeigt Figur 2 eine Konstruktion mit einer einarmigen Schwenkklinke 20. Hier sind Federn 21 erforderlich, die die Schwenkklinke in ihrer neutralen Position sichern. Bei 22 ist die mit der Rastausnehmung 23 versehene rohrförmige kopfstützenseitige Stützstange dargestellt, während die lehnenseitige Aufnahme für diese mit 24 bezeichnet ist. Bei 25 erkennt man wiederum längs einer Mantellinie angeordnete Rastausnehmungen in der Aufnahme 24.

In diesem wie auch in dem folgenden Ausführungsbeispiel ist die träge Masse in die Schwenkklinke 20 unterhalb ihrer Schwenkachse 26, die wiederum in der rohrförmigen Stützstange 22 querverlaufend festgelegt ist, integriert.

Die Ausführungsform der Erfindung nach Figur 3 weist die Besonderheit auf, daß die Schwenkklinke 30 zwei in entgegengesetzten Richtungen weisende Klinkenbereiche 31 und 32 besitzt. Sie ist also als crashbetätigte Höhenarretierung sowohl bei einem Frontalcrash als auch bei einem Heckcrash wirksam. Den beiden Klinkenbereichen 31 und 32 sind individuelle Rastausnehmungen 33 und 34 in der wiederum rohrförmigen kopfstützenseitigen Stützstange 35 sowie 36 und 37 in der ebenfalls rohrförmigen Aufnahme 38 für diese zugeordnet. In der Regel wird man auch die Ausnehmungen 36 und 37 ebenso wie die Ausnehmungen 33 und 34 (bei gleicher Höhe der Klinkenbereiche 31 und 32) sich paarweise diametral gegenüberliegend anordnen. Dies schließt jedoch nicht aus, die Klinkenbereiche 31 und 32 und/oder die Rastausnehmungen 36 und 37 höhenmäßig gegeneinander zu versetzen, so daß bei Crashvorgängen in unterschiedlichen Richtungen hinsichtlich der crashbetätigten Arretierung unterschiedliche Verhältnisse vorliegen.

Mit der Erfindung ist demgemäß eine gattungsgemäße crashbetätigte Höhenarretierung für eine Kopfstütze geschaffen, die bei einfachem Aufbau völlige Freiheit hinsichtlich der betriebsmäßigen Höhenverstellung und Höhenarretierung läßt.

## Patentansprüche

1. Crashbetätigte Höhenarretierung für eine Kopfstütze an einer Rückenlehne eines Fahrzeugsitzes mit einer kopfstützenseitigen Stützstange, einer rückenlehnenseitigen Aufnahme für diese und einem Arretierglied, das im Crashfalle über eine träge Masse in einer eine formschlüssige Verbindung zwischen Stützstange und Aufnahme herstellenden Arretierposition gesichert ist, dadurch gekennzeichnet, daß die träge Masse (7) in das als Schwenkklinke (5) ausgebildete Arretierglied integriert ist, das mit seiner Schwenkebene parallel zur Crashrichtung verlaufend angeordnet ist und nur im Crashfalle durch die träge Masse (7) aus einer Höhenverstellungen der Kopftstütze zulassenden neutralen Position in die Arretierposition (5') schwenkt.

2. Höhenarretierung nach Anspruch 1, dadurch gekennzeichnet, daß die Schwenkklinke (5) einen unteren klinkenförmigen Arm (8) und einen oberen die träge Masse bildenden Arm (7) aufweist.

3. Höhenarretierung nach Anspruch 2, dadurch gekennzeichnet, daß der obere Arm (7) eine derart exzentrische Massenbelegung hat, daß er im crashfreien Zustand ein die Schwenkklinke (5) in der neutralen Position sicherndes Moment erzeugt.

4. Höhenarretierung nach Anspruch 1 oder 2, dadurch gekennzeichnet, daß der Schwenkklinke (20) eine sie im crashfreien Zustand in der neutralen Position sichernde Federanordnung (21) zugeordnet ist.

5. Höhenarretierung nach einem der Ansprüche 1 bis 4, dadurch gekennzeichnet, daß Stützstange (1) und Aufnahme (2) durch teleskopierende Rohre gebildet sind, von denen das innere Rohr (1) um eine querverlaufende Schwenkachse (6) schwenkbar die Schwenkklinke (5) aufnimmt, der in definierten Höhenstellungen der Kopfstütze fluchtende Rastausnehmungen (3, 4) in beiden Rohren (1, 2) zugeordnet sind.

6. Höhenarretierung nach Anspruch 5, dadurch gekennzeichnet, daß die Schwenkklinke (30) zwei sich gegenüberstehende Klinkenbereiche (31, 32) aufweist, denen individuelle Rastausnehmungen (33, 34; 36, 37) in beiden Rohren (35, 38) zugeordnet sind.
